# EUROPÄISCHE PATENTSCHRIFT

(11) **EP 0 312 147 B1**
(45) Veröffentlichungstag und Bekanntmachung des Hinweises auf die Patenterteilung: **12.01.1994**
(21) Anmeldenummer: 88202175.1
(22) Anmeldetag: 03.10.1988
(51) Int. Cl.: H01R 13/447, H01R 13/52

(54) **An einem Stecker bzw. einer Kupplung einer Lichtwellenleiter-Steckerverbindung anordbare Schutzkappe**
Protecting cover which can be mounted on a plug or on the coupling of a connecting assembly for an optical wave guide
Capuchon de protection montable sur une fiche ou sur le couplage d'un connecteur pour guide d'onde lumineuse

(30) Priorität: 16.10.1987 DE 3735038
(43) Veröffentlichungstag der Anmeldung: 19.04.1989
(73) Patentinhaber: Philips Patentverwaltung GmbH, 22335 Hamburg (DE); Philips Electronics N.V., 5621 BA Eindhoven (NL)
(72) Erfinder: Lohmüller, Detlev, D-5300 Bonn 3 (DE)
(74) Vertreter: Koch, Ingo

(56) Entgegenhaltungen:
- GB-A- 2 044 559
- US-A- 2 962 688

## Beschreibung

Die Erfindung bezieht sich auf eine an einem Stecker bzw. einer Kupplung einer Lichtwellenleiter-Steckverbindung anordbare Schutzkappe.

Derartige allgemein bekannte Schutzkappen sind insbesondere zum Schutz der Verbindungselemente einer Lichtwellenleiter-Steckverbindung erforderlich, wenn die Verbindungsflächen und insbesondere die gegenüber einander zu bringenden Stirnflächen der LWL vor mechanischer Beschädigung oder gegen Staub zu schützen sind.

Für den Schutz einer aus Stecker und Kupplung bestehenden Steckverbindung sind dabei mindestens zwei Schutzkappen erforderlich. Für eine aus zwei Steckern und einer diese verbindenden Zwischenkupplung bestehenden Steckverbindung sind sogar vier Schutzkappen nötig.

Der Erfindung liegt die Aufgabe zugrunde, den Aufwand für die Schutzkappen und insbesondere für deren Lagerhaltung zu vermindern.

Die Lösung gelingt dadurch, daß die Schutzkappe sowohl ein Schutzteil für den Stecker als auch ein Schutzteil für die Kupplung aufweist.

Die Vorteile der Erfindung und deren in den Unteransprüchen gekennzeichneten Weiterbildungen werden anhand der Beschreibung eines in der Zeichnung dargestellten vorteilhaften Ausführungsbeispiels näher erläutert.
- Fig. 1: zeigt perspektivisch die aus zwei Steckern und einer Zwischenkupplung bestehende Steckverbindung zweier Lichtwellenleiter.
- Fig. 2: zeigt, teilweise geschnitten, eine Seitenansicht des ersten Steckers nach Fig. 1.
- Fig. 3: zeigt einen Längsschnitt durch die Zwischenkupplung nach Fig. 1.
- Fig. 4: zeigt, teilweise geschnitten, eine Seitenansicht des zweiten Steckers nach Fig. 1.
- Fig. 5: zeigt einen Längsschnitt durch eine erfindungsgemäß für die Steckverbindungselemente nach Fig. 1 gestaltete Schutzkappe.

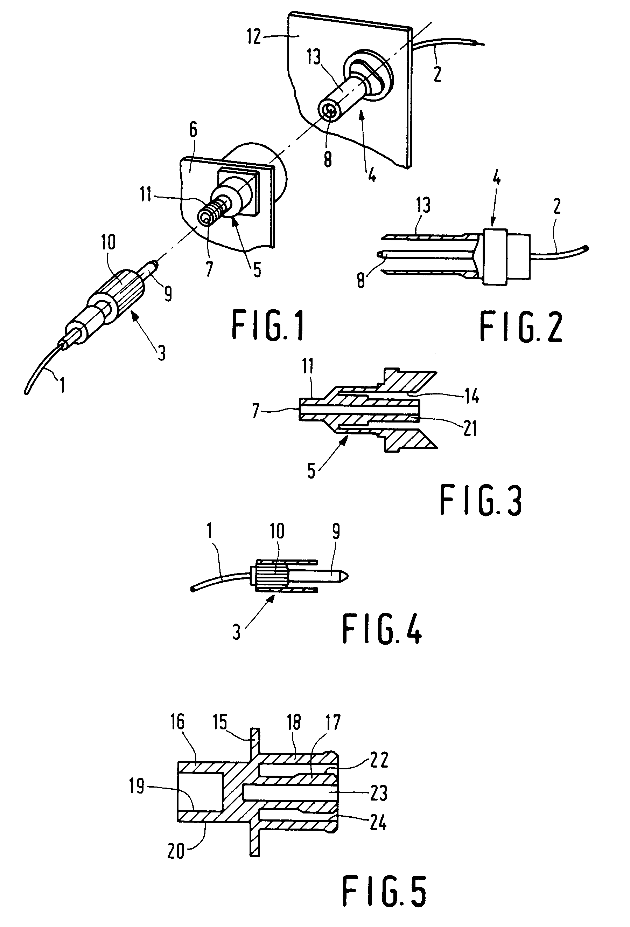

Die in Fig. 1 perspektivisch dargestellte bekannte Steckverbindung für Lichtwellenleiter 1 und 2 besteht aus die LWL 1 und 2 aufnehmenden Steckern 3 und 4, die in gegenüberliegende Seiten einer Zwischenkupplung 5 derart einführbar sind, daß die Stirnflächen der LWL 1 und 2 einander gegenüberliegen.

Die Zwischenkupplung 5 ist im Ausführungsbeispiel an einer Wandung 6 eines Gerätes befestigt und hat eine durchgehende zentrale Bohrung 7 (vgl. Fig. 3) zur Aufnahme der die Enden der LWL 1 und 2 umgebenden Steckerstifte 8 und 9 (vgl. Figuren 2 und 4). Der Stecker 3 des im Gerät geführten LWL 1 wird mit einer Überwurfmutter 10 am Außengewinde 11 der Zwischenkupplung 5 verschraubt. Der an einer Wandung 12 eines Einschubteils radial beweglich angeordnete Stecker 4 wird mit seiner den Steckerstift 8 umgebenden Fanghülse 13 in die mit Gleitpassung zugeordnete Innenfläche 14 der Fangbohrung der Zwischenkupplung 5 eingeschoben, wobei der Steckerstift 8 in die Bohrung 7 eingeführt wird.

Der Aufnahmeteil 21 (Fig. 3) der Zwischenkupplung 5 kann ein Außengewinde entsprechend dem Gewinde 11 aufweisen, so daß ein Stecker 3 auch an dieser Seite anschließbar wäre.

Zum Schutz der Anschlußbereiche sowohl der Stecker 3 und 4 als auch der Zwischenkupplung 5 gegen Staub und mechanische Beschädigung ist die universell verwendbare, in gegenüber Fig. 1 vergrößertem Maßstab gezeichnete Staubschutzkappe nach Fig. 5 geeignet, welche an der linken Seite einer Verbindungswandung 15 eine Befestigungshülse 16 für die Zwischenkupplung 5 und an der rechten Seite koaxial zur Befestigungshülse 16 eine Befestigungshülse 17 sowie eine diese koaxial umfassende Befestigungshülse 18 für die Stecker 3 bzw. 4 aufweist.

Die Befestigungshülse 16 ist mit einem Innengewinde 19 auf das Außengewinde 11 der Zwischenkupplung 5 schraubbar. Mit ihrer zylindrischen Außenfläche 20 paßt die Befestigungshülse 16 stramm in die Fangöffnung 14 der Zwischenkupp-lung 5. Sie könnte jedoch auch mit ihrem Innengewinde 19 auf ein gegebenenfalls vorgesehenes Außengewinde des Aufnahmeteils 21 der Zwischenkupplung 5 verschraubt werden.

Die Befestigungshülse 17 hat eine Innenaufnahme 23 für die Steckerstifte 8 oder 9 und ein Außengewinde 22, auf welches die Überwurfmutter 10 des Steckers 3 aufschraubbar ist.

Die Innenfläche der Befestigungshülse 18 paßt stramm über die Außenfläche der Fanghülse 13 des Steckers 4.

Die Staubschutzkappe nach Fig. 5 paßt also für vier verschiedene Anschlußbereiche der Steckverbindung nach Fig. 1. Selbstverständlich ist aber eine erfindungsgemäß gestaltete Schutzkappe nicht nur für eine in Fig. 1 als Ausführungsbeispiel dargestellte Steckverbindung geeignet. Ihre konstruktive Gestaltung kann beliebigen Arten von Steckverbindungen angepaßt werden. Wesentlich ist dabei, daß die Schutzkappe mehrere Anschlußelemente hat, welche Verbindungsflächen aufweisen, die jeweils einer Anschlußfläche des korrespondierenden Gegenstücks eines zu schützenden Steckers bzw. einer Kupplung entsprechen. So entspricht beispielsweise als Anschlußfläche das Außengewinde 22, auf welches die Überwurfmutter 10 des Steckers 3 geschraubt wird, dem Außengewinde 11 der Zwischenkupplung 5.

Anschlußflächen können als Gewindeflächen oder einen Haftsitz bewirkende glatte Flächen gestaltet sein. Wenn Stecker und Kupplung über z.B. eine Bajonettverbindung aneinander fixierbar sind, kann auch die Schutzkappe entsprechende Elemente für eine gleichartige Bajonettverbindung aufweisen.

Es ist möglich, die vier Anschlußbereiche der Steckverbindung nach Fig. 1 durch vier gleichartige Schutzkappen nach Fig. 5 einzeln zu schützen.

Bei kompletten Versand oder Lagerung der Verbindungselemente 3,4 und 5 könnten diese Elemente durch zwei dann als Zwischenkappen dienende Schutzkappe zu einer Einheit verbunden werden, da die Befestigungsteile für Stecker und Kupplung an verschiedenen Seiten der Schutzkappe angeordnet sind.

Auf freien Enden einer einen Stecker schützenden Schutzkappe kann also die zugehörige Kupplung geschützt befestigt werden.

Die erfindungsgemäße Gestaltung der Schutzkappe bietet weiterhin die Möglichkeit, mehrere für eine Steckverbindung benötigte Schutzkappen koaxial aneinander zu stecken bzw. zu schrauben. Von einer solchen aus mehreren Schutzkappen gebildeten "Stange" kann man nach Bedarf jeweils eine Schutzkappe abnehmen.

Man erkennt nach der Beschreibung des gewählten Ausführungsbeispiels, daß die erfindungsgemäße Schutzkappe vielseitig anwendbar ist. Man benötigt nur noch eine einzige Bauform einer Schutzkappe für eine Steckverbindung. Der Aufwand für Herstellung und Lagerhaltung ist verringert. Der Anwender muß nicht mehr aus einer Fülle von verschiedenen Schutzkappen die richtige herausfinden. Eine erfindungsgemäße Schutzkappe ist als Kunststoffbauteil kostengünstig z.B. als Spritzgußteil einfach herstellbar.

## Patentansprüche

1. An einem Stecker oder an einer Kupplung einer Lichtwellenleiter-Steckverbindung anordbare Schutzkappe, zur Abdeckung der Verbindungsflächen des Steckers oder der Kupplung und der Stirnfläche eines Lichtwellenleiters,
dadurch gekennzeichnet, daß die Schutzkappe sowohl ein Schutzteil (17,18) für den Stecker (3,4) als auch ein Schutzteil (16) für die Kupplung (5) aufweist.

2. Schutzkappe nach Anspruch 1,
dadurch gekennzeichnet, daß die Schutzteile für Stecker (3,4) und Kupplung (5) an verschiedenen Seiten eines verbindenden Zwischenkörpers (15) angeordnet sind.

3. Schutzkappe nach Anspruch 2,
dadurch gekennzeichnet, daß die Schutzteile (17,18 bzw. 16) für Stecker (3,4) und Kupplung (5) koaxial zueinander angeordnet sind.

4. Schutzkappe nach einem der Ansprüche 1 bis 3,
dadurch gekennzeichnet, daß die Schutzteile (17,18 bzw. 16) für den Stecker (3,4) bzw. die Kupplung (5) zylindrische Haftflächen (22,24) bzw. (19,20) aufweisen, welche zylindrischen Flächen der korrespondierenden Gegenstücke der Steckverbindung (Kupplung oder Stecker) entsprechen.

5. Schutzkappe nach einem der Ansprüche 1 bis 4,
dadurch gekennzeichnet, daß die Schutzteile für den Stecker und/oder die Kupplung zwei zylindrische Haftflächen (24,20) für unterschiedliche Stecker und/oder Kupplungen aufweisen.

6. Schutzkappe nach einem der Ansprüche 1 bis 5,
dadurch gekennzeichnet, daß die Haftflächen mit radialem Kraftschluß auf den korrespondierenden zylindrischen Flächen des Steckers bzw. der Kupplung gehalten sind.

7. Schutzkappe nach einem der Ansprüche 1 bis 5,
dadurch gekennzeichnet, daß die Haftflächen Gewinde aufweisen und die Schutzteile auf den Stecker bzw. die Kupplung schraubbar sind.

8. Schutzkappe nach einem der Ansprüche 1 bis 6,
dadurch gekennzeichnet, daß die Schutzteile auf den Stecker bzw. die Kupplung aufschiebbar und durch Rastmittel oder Bajonettverschluß fixierbar sind.

9. Schutzkappe nach einem der Ansprüche 1 bis 8 zur Verwendung für eine Steckverbindung für Lichtwellenleiter, welche aus zwei die zu verbindenden LWL aufnehmenden Steckern und einer die Stecker auf verschiedenen Seiten aufnehmenden Zwischenkupplung besteht,
dadurch gekennzeichnet, daß an einer Seite einer Verbindungswandung (15) der Schutzkappe Schutzteile (16) für die beiden Kupplungsseiten der Zwischenkupplung (5) und an der anderen Seite die Schutzteile (17,18) für die Stecker (3,4) angeordnet sind.

10. Schutzkappe nach Anspruch 9,
dadurch gekennzeichnet, daß die Schutzteile für die Zwischenkupplung (5) zu einem Hohlzylinderelement (16) vereinigt sind, dessen innere (19) und äußere (20) Zylinderflächen als Haftflächen dienen.

## Claims

1. A protective cap which can be provided on a plug or a coupling member of a plug connection for optical waveguides, said protective cap being used to cover the connection areas of the plug or coupling member and the end face of a optical waveguide, characterized in that the protective cap comprises both a protective member (17, 18) for the plug (3, 4) and a protective member (16) for the coupling member (5).

2. A protective cap as claimed in Claim 1, characterized in that the protective portions for plug (3, 4) and coupling member (5) are arranged on different sides of a connecting intermediate member (15).

3. A protective cap as claimed in Claim 2, characterized in that the protective members (17, 18 and 16, respectively) for plug (3, 4) and coupling member (5) are arranged coaxially with respect to each other.

4. A protective cap as claimed in any of the Claims 1 to 3, characterized in that the protective members (17, 18 and 16, respectively) for the plug (3, 4) and the coupling member (5) comprise cylindrical bonding surfaces (22, 24) and (19, 20), respectively, which correspond to cylindrical surfaces of the corresponding counterparts of the plug connection (coupling member or plug).

5. A protective cap as claimed in any of the Claims 1 to 4, characterized in that the protective parts for the plug and/or the coupling member comprise two cylindrical bonding surfaces (24, 20) for different plugs and/or coupling members.

6. A protective cap as claimed in any of the Claims 1 to 5, characterized in that the bonding surfaces are held on the corresponding cylindrical surfaces of the plug and/or coupling by applying a radial force.

7. A protective cap as claimed in any of the Claims 1 to 5, characterized in that the bonding surfaces comprise screw thread and the protective parts can be screwed on the plug and/or the coupling member.

8. A protective cap as claimed in any of the Claims 1 to 6, characterized in that the protective parts can be slid on the plug and/or the coupling member and can be fixed by snapping means or bayonet lock.

9. A protective cap as claimed in any of the Claims 1 to 8 for use for a plug connection for optical waveguides, which consists of two plugs receiving the optical waveguides to be connected and an intermediate coupling member receiving the plug on different sides, characterized in that on one side of a connection wall (15) of the protective cap protective parts (16) for the two coupling sides of the intermediate coupling member (5) and on the other side the protective parts (17, 18) for the plugs (3, 4) are provided.

10. A protective cap as claimed in Claim 9, characterized in that the protective parts for the intermediate coupling member (5) are combined to form a hollow cylindrical element (16) whose inner (19) and outer (20) cylindrical surfaces serve as bonding surfaces.

## Revendications

1. Capuchon de protection pouvant être monté sur une fiche mâle ou une fiche femelle d'une connexion par fiches pour guides de lumière, conçu pour couvrir les faces de connexion des fiche mâle ou femelle et la face terminale d'un guide de lumière, caractérisé en ce que le capuchon de protection présente une partie de protection (17, 18) pour la fiche mâle (3, 4) aussi bien qu'une partie de protection (16) pour la fiche femelle (5).

2. Capuchon de protection selon la revendication 1, caractérisé en ce que les parties de protection pour les fiches mâle (3, 4) et femelle (5) sont fixées de plusieurs côtés d'un corps de connexion intermédiaire (15).

3. Capuchon de protection selon la revendication 2, caractérisé en ce que les parties de protection (17, 18, respectivement 16) pour les fiches mâle (3, 4) et femelle (5) sont mutuellement disposés de façon coaxiale.

4. Capuchon de protection selon l'une quelconque des revendications 1 à 3, caractérisé en ce que les parties de protection (17, 18, respectivement 16) pour les fiches mâle (3, 4) ou femelle (5) présentent des surfaces d'adhérence cylindriques (22, 24) respectivement (19, 20) qui correspondent aux surfaces cylindriques des pendants correspondants de la connexion par fiches (fiche femelle ou fiche mâle).

5. Capuchon de protection selon l'une quelconque des revendications 1 à 4, caractérisé en ce que les parties de protection pour les fiches mâle et/ou femelle présentent deux surfaces d'adhérence cylindriques (24, 20) conçues pour des fiches mâles et/ou femelles différentes.

6. Capuchon de protection selon l'une quelconque des revendications 1 à 5, caractérisé en ce que les surfaces d'adhérence sont maintenues avec une force radiale sur les surfaces cylindriques correspondantes des fiches mâle respectivement femelle.

7. Capuchon de protection selon l'une quelconque des revendications 1 à 5, caractérisé en ce que les surfaces d'adhérence présentent un filet et que les parties de protection peuvent être vissées sur les fiches mâle respectivement femelle.

8. Capuchon de protection selon l'une quelconque des revendications 1 à 6, caractérisé en ce que les parties de protection peuvent être glissées sur les fiches mâle respectivement femelle et qu'elles peuvent être fixées au moyen d'un élément de verrouillage ou d'un joint à baïonnette.

9. Capuchon de protection selon l'une quelconque des revendications 1 à 8 utilisé pour une connexion par fiches pour des guides de lumière, constitué par deux fiches logeant les guides de lumière à connecter et par une fiche intermédiaire logeant les fiches de côtés différents, caractérisé en ce que des parties de protection (16) conçues pour les deux côtés de connexion de la fiche intermédiaire (5) sont disposées d'un côté de la paroi de connexion (15) du capuchon de protection et que les parties de protection (17, 18) pour les fiches (3, 4) sont disposées de l'autre côté du capuchon de protection.

10. Capuchon de protection selon la revendication 9, caractérisé en ce que les parties de protection conçues pour la fiche femelle intermédiaire (5) sont réunies de manière à présenter un élément cylindrique creux (16) dont les surfaces cylindriques intérieure (19) et extérieure (20) fonctionnent comme surfaces d'adhérence.
